Europäisches Patentamt

European Patent Office

Office européen des brevets

(19)

(11) Publication number: **0 166 485 B1**

# EUROPEAN PATENT SPECIFICATION

(12)

(45) Date of publication of patent specification: **03.04.91**   (51) Int. Cl.⁵: **A01K 11/00**

(21) Application number: **85200927.3**

(22) Date of filing: **11.06.85**

(54) Animal ear tag-stud, animal ear tag-stud/support rod combination.

(30) Priority: **19.06.84 GB 8415613**

(43) Date of publication of application:
**02.01.86 Bulletin 86/01**

(45) Publication of the grant of the patent:
**03.04.91 Bulletin 91/14**

(84) Designated Contracting States:
**AT BE CH DE FR GB IT LI LU NL SE**

(56) References cited:
**EP-A- 0 056 533**
**DE-A- 2 610 564**
**FR-A- 2 371 139**
**US-A- 3 731 414**

(73) Proprietor: **SHELL INTERNATIONALE RE-
SEARCH MAATSCHAPPIJ B.V.**
**Carel van Bylandtlaan 30**
**NL-2596 HR Den Haag(NL)**

(72) Inventor: **Rickard, David Keith**
**4 Station View Frimley Road**
**Ash Vale Aldershot Hampshire(GB)**
Inventor: **Boysen, Ole**
**Cedar Lodge Church Street**
**Shipton Under Wychwood Oxfordshire(GB)**

(74) Representative: **Bennett, David Arthur Horder
et al**
**4, York Road**
**London SE1 7NA(GB)**

## Description

The present invention relates to an animal ear tag-stud which is to be used as a male part of an animal ear tag particularly for cattle. The latter is commonly used for identification purposes or as a slow release device for pesticides in particular pyrethroids such as insecticides like permethrin, cypermethrin and fenvalerate. It is well known to provide an eat-tag stud which consists of a panel having a projecting stem which stem having a head comprising a flanged outer end which is shaped into a conical form.

From Canadian patent 994099 a stud is known consisting of a panel and a projecting hollow stem formed from a resilient material. The hollow stem has a head comprising a flanged outer end with a hard material tip fitted thereto.

The stem and tip are so configured that a support rod can pass through the stem into such engagement with the tip that a pointed extremity is formed by the point of the support rod which facilitates the stud to pierce through an animal's ear. The female part of the ear tag having a boss with a hole of a smaller diameter than the largest cross-sectional diameter of the head of the stem. A disadvantage of the stud as described in Canadian patent 994099 is that the manufacture of the tip of the stud is rather complex in that it requires the use of two materials. One is the material from which the major part of the stud is formed and the other material is the hard material e.g. hard plastic or metal from which the tip of the flanged outer end of the stem is formed. One learns from Canadian patent 994099 that the hard material tip is essential to give the stud a satisfactory piercing ability. In this type of stud the enlarged end of the stem has to be moulded around the hard material tip which requires a flange fitting into a groove in the inner surface of the hollow stem to allow the tip to become an integral part with the stud.

Applicants have now designed a stud which does not require a hard material tip and which surprisingly still satisfactorily can pierce through an animal's ear. Furthermore the stud can be prepared out of one piece of resilient material which makes the process for preparing the stud less complicated that the process for preparing the stud as described in Canadian 994099, in which two separate pieces have to be assembled to one as hereinbefore described. Another advantage of the present stud is that when fitted to the animals's ear it will not irritate the animal because of its soft edge at the pointed end. However studs as described in the prior art containing brass or other hard material inserts leave hard or sharp edges at the pointed end which might irritate the animal itself or other animals when contacting each other. Therefore the present invention relates to an animal ear tag-stud having a panel and a projecting hollow stem, said hollow stem having a head comprising a flanged outer end with a tip having a reduced end, said stem and said tip being so configured that a support rod having a point can pass through the stem into such engagement with the tip that a pointed extremity is formed, in which the hollow stem and tip have been made of resilient material.

Preferably the stem and tip of the animal ear tag-stud have been made out of one piece of a resilient material.

Material of a resilient nature from which the ear tag-stud is made is preferably selected from the group consisting of low density polythene, high density polythene, polypropylene, thermoplastic polyurethane, thermoplastic rubber, PVC, ABS and nylon such as nylon 6.

Most preferred resilient material is low density polyethylene. Since the support rod is preferably made from a material which is more rigid than the material from which the stem and panel are made the support rod material is preferably selected from the group of materials consisting of acetal, nylon 6, nylon 66, polycarbonate, modified polypherol oxide, polymethyl, methacrylate (acrylic), polystyrene, thermosplastic polyester, rigid PVC, ABS, metals and wood. The most preferred material is glass fibre filled nylon 66. The performance of the stud according to the present invention appears to be further improved by shaping the tip outer surface such that it has one or more edges substantially extending from the tip-basis to the tip-top.

The edges are suitably sharp rims on the outer surface of the tip. The edges can also suitably be the sharp edges of grooves formed in the outer surface of the tip. The desired tip profile consisting of grooves and/or rims can by obtained by applying moulding means which are so configured that the leave one or more rims and/or grooves on/in the outer surface of the tip of the stud.

It is believed that the edges on the tip facilitate the stud to cut its way through the animal's ear thereby enhancing the overall efficiency of the piercing operation.

Therefore the animal ear tag-stud preferably has a tip outer surface which has one or more edges substantially extending from the tip-basis to the tip-top. However since the stud is made from resilient material rather than from hard material the edges although sharp will not irritate the animal.

Preferably the number of edges is at least two since the cutting performance of the stud is expected to improve with increasing number of edges.

To enhance the usefulness of the present animal ear tag-stud the latter is preferably moulded in such a way that to the back-side of the panel an identification plate can be attached. This is of particular importance when pesticidal ear-tags have to be attached to an animal ear of which tags the female part consists of a tab impregnated with pesticides which slowly release therefrom and which female part itself is not suitable to be used for identification purposes.

In this case it is of substantial convenience that an identification plate can be easily attached to the ear tag i.e. to the back of the stud-panel.

Therefore the present invention further provides an animal ear tag-stud as hereinbefore described in which to the back-side of the panel an identification plate is attached.

The supporting rod is preferably moulded with a flanged outer end, which is e.g. in the form of a small panel or a disc, said rod being of such length that when it cannot pass any further through the stud stem there is left a certain interspace between the flanged outer end and the stud panel. This makes it possible that the stud-support rod combination can be attached to one of the jaws of the pliers by pushing the flanged outer end of the support rod behind a retaining clip, which is suitably in the form of a plate which has an open slot extending in from its outer end and through which the support rod can just pass.

Preferably the shortest distance between the flanged outer end of said rod and the back-side of the stud panel is in the range of 0.5 - 6mm.

A major advantage of the ear tag-stud/support rod combination according to the present invention is that the support rod can be retained on one of the pliers jaws and then disposed of after completion of attachement of an ear tag to an animal's ear and opening of the jaws of the pliers. Thus the present invention make it possible that the attachment of an ear tag to an animal's ear and the subsequent withdrawal of the support rod of the present ear tag stud conveniently coincide with respectively the closing and opening movements of the pliers' jaws. A further advantage of the present ear tag-stud/support rod combination is that each support rod is used only once, which prevents spreading of infections from one animal to the other which could easily happen if vests of blood from an infected animal are on a support rod which is used again for attaching an ear tag to another animal not yet infected.

The present invention still further provides a process for making an animal ear tag-stud which comprises the moulding of a resilient material as mentioned hereinbefore into a panel with a projecting hollow stem having a head comprising a flanged outer end with a tip.

Thus the present invention also provides an animal ear tag-stud/support rod combination comprising an animal ear tag-stud and a support rod as hereinbefore described and in which the support rod is moulded integral with a flanged outer end and said rod being of such length that when it cannot pass any further through the stud stem and the stud-tip and the point of the rod forms a pointed extremity, an interstice exists between the flanged outer end of said rod and the back-side of the stud-panel. The size of the interstice is dependent on the thickness of the retaining clip which holds the stud/support rod combination on one of the jaws of the pliers and is suitably in the range of 0.5-6mm.

The present invention still further provides a method of attaching an ear tag to an animal's ear which comprises attaching a stud/support rod combination as described in the previous paragraph to jaws of pliers, using the pliers to push the stud/support rod combination through the animal's ear and into a female ear tag part, and subsequently withdrawing the support rod.

The present invention still further provides an animal ear tag comprising a stud as described hereinbefore, which stud is engageable with a female part of the tag.

The present invention will be further described with reference to the accompanying drawings.

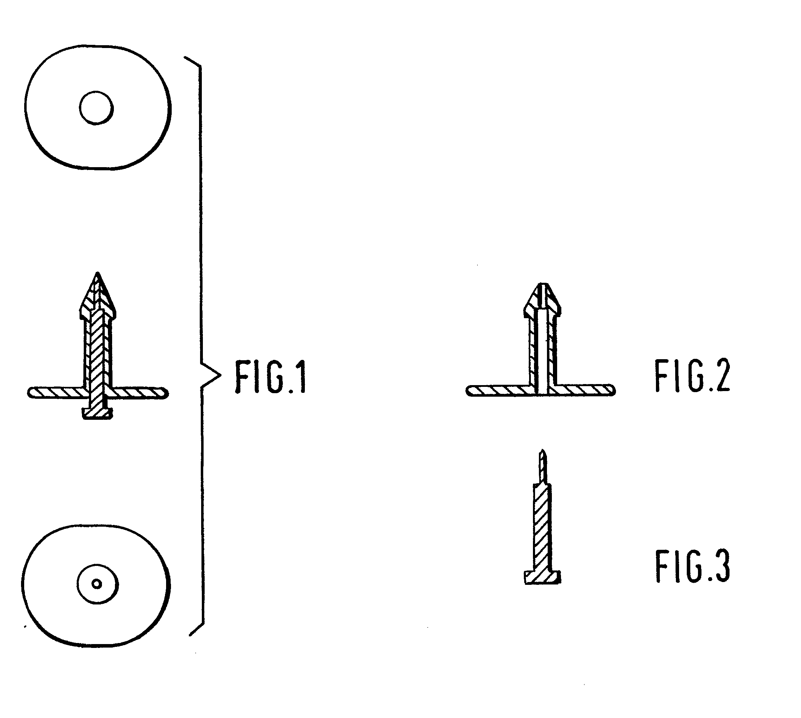

Figure 1 is a cross-section of the stud/support rod combination, clearly showing the interstice between stud panel and the flanged outer end of the support rod.

Figure 2 is a cross-section of the stud.

Figure 3 is a cross-section of the support rod.

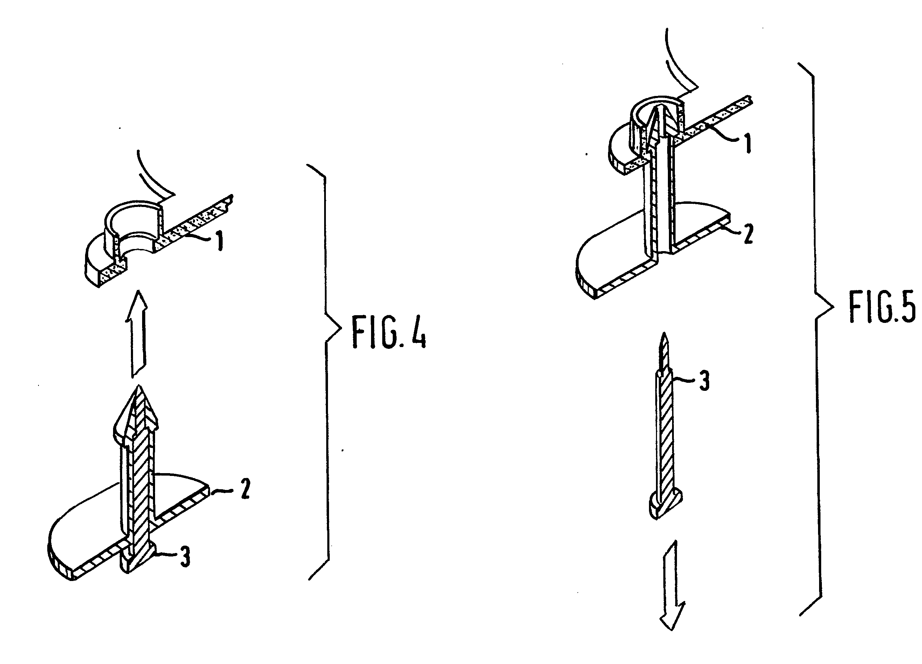

Figure 4 is a perspective cross-section of a stud/support rod combination (2/3) and of part of a female part (1) of an animal ear tag just before the stud with support rod is pushed through the animal's ear and into the female part of the animal's ear tag.

Figure 5 shows the support rod (3) withdrawn from the stud (2) after the stud (2) has been pushed through and fixed with the female part (1) of the ear tag.

## Claims

1. An animal ear tag-stud (2) having a panel and a projecting hollow stem, said hollow stem having a head comprising a flanged outer end with a tip having a reduced end, said stem and said tip being so configured that a support rod (3) having a point can pass through the stem into such engagement with the tip that a pointed extremity is formed by the point of the support rod (3), in which the hollow stem and tip have been made of resilient material.

2. An animal ear tag-stud as claimed in claim 1 in which the stem and tip have been made out of one piece of a resilient material.

3. An animal ear tag-stud as claimed in claim 2 in which the material is selected from the group of low density polythene, high density polythene, polypropylene, thermoplastic polyurethane, thermoplastic rubber, PVC, ABS and nylon such as nylon 6.

4. An animal ear tag-stud as claimed in claim 3 in which the material is low density polyethylene.

5. An animal ear tag-stud/support rod combination comprising an animal ear tag-stud (2) as claimed in any one of the claims 1-4 and a support rod (3) as defined in claim 1, in which the support rod (3) is moulded integral with a flanged outer end and said rod (3) being of such length that when it cannot pass any further through the stud stem and the stud-tip and the point of the rod (3) forms a pointed extremity, an interstice exists between the flanged outer end of said rod (3) and the backside of the stud-panel.

6. An animal ear tag-stud/support rod combination as claimed in claim 5 in which the support rod (3) has been made from a material selected from the group consisting of acetal, nylon 6, nylon 66, polycarbonate, modified polypheroloxide, polymethylmethacrylate (acrylic), polystyrene, thermoplastic polyester, rigid PVC, ABS, metals and wood.

7. An animal ear tag-stud/support rod combination as claimed in claim 6 in which the support rod (3) has been made from glass fibre filled nylon 66.

8. A method of attaching an ear tag to an animal's ear which comprises attaching a stud/support rod combination (2, 3) as claimed in claims 5-7 to jaws of pliers, using the pliers to push the stud/support rod combination (2, 3) through the animal's ear and into a female ear tag part (1), and subsequently withdrawing the support rod (3).

9. A process for making an animal ear tag-stud as claimed in any one of the claim 1 comprising moulding resilient material as claimed in claim 3 into a panel with a projecting hollow stem having a head comprising a flanged outer end with a tip.

10. An animal ear tag comprising a stud as claimed in any one of the claims 1-4, which stud (2) is engageable with a female part (1) of the tag.

**Revendications**

1. Une cheville (2) pour le marquage de l'oreille d'un animal comprenant un panneau et une tige creuse faisant saillie, cette tige creuse ayant une tête comprenant une extrémité extérieure à collerette avec une pointe ayant une extrémité réduite, la tige et la pointe étant d'une configuration telle qu'une broche de support (3) ayant une pointe puisse passer à l'intérieur de la tige pour venir en prise avec la pointe de la cheville de manière qu'une extrémité pointue soit formée par la pointe de la broche de support (3), où la tige creuse et la pointe de la cheville ont été formées de matière élastique.

2. Une cheville pour le marquage de l'oreille selon la revendication 1, dans laquelle la tige et la pointe de la cheville ont été réalisées en une pièce de matière élastique.

3. Une cheville pour le marquage de l'oreille selon la revendication 2, dans laquelle la matière est choisie dans le groupe constitué par les matières suivantes : polythène basse densité, polythène haute densité, polypropylène, polyuréthane thermoplastique, caoutchouc thermoplastique, PVC, ABS et Nylon tel que Nylon 6.

4. Une cheville pour le marquage de l'oreille selon la revendication 3 dans laquelle la matière est du polyéthylène basse densité.

5. Une combinaison d'une cheville pour le marquage de l'oreille d'un animal avec une broche de support comprenant une cheville (2) pour le marquage de l'oreille d'un animal selon l'une quelconque des revendications 1-4 et une broche de support telle que définie dans la revendication 1, où la broche de support (3) est moulée d'une seule pièce avec une extrémité extérieure à collerette, la broche (3) étant d'une longueur telle que quand elle ne peut pas aller plus loin à l'intérieur de la tige de la cheville et de la pointe de la cheville et la pointe de la broche (3) forme une extrémité pointue, il existe un interstice entre l'extrémité extérieure à collerette de la tige (3) et le côté dorsal du panneau de la cheville.

6. Une combinaison d'une cheville pour le marquage de l'oreille d'un animal et d'une broche de support selon la revendication 5, dans laquelle la broche de support (3) a été formée à partir d'une matière choisie dans le groupe suivant : acétal, Nylon 6, Nylon 66, polycarbonate, oxyde de polyphénol modifié, polyméthylméthacrylate (résine acrylique), polystyrène, polyester thermoplastique, PVC rigide, ABS, métaux et bois.

7. Une combinaison d'une cheville pour le marquage de l'oreille d'un animal et d'une broche de support selon la revendication 6, dans laquelle la broche de support (3) a été formée de Nylon 66 chargé de fibre de verre.

8. Une méthode pour attacher un dispositif de marquage pour oreille à l'oreille d'un animal, selon laquelle on attache une combinaison cheville/broche de support (2,3) telle que revendiquée dans l'une quelconque des revendications 5-7 aux mâchoires d'une pince, on utilise la pince pour pousser la combinaison cheville/broche de support (2,3) à travers l'oreille de l'animal et dans une partie femelle (1) du dispositif de marquage, et ensuite on enlève la broche de support (3).

9. Un procédé de fabrication d'une cheville pour le marquage de l'oreille d'un animal telle que revendiquée dans l'une quelconque des revendications 1-4, comprenant le moulage d'une matière élastique telle que spécifiée dans la revendication 3 en un panneau avec une tige creuse saillante ayant une tête comprenant une extrémité extérieure à collerette avec une pointe.

10. Un dispositif pour le marquage de l'oreille d'un animal comprenant une cheville selon l'une quelconque des revendications 1-4, cette cheville (2) pouvant venir en prise avec une partie femelle (1) du dispositif de marquage.

## Ansprüche

1. Tier-Ohrmarkenzapfen (2) mit einer Platte und einem abstehenden hohlen Schaft, wobei der hohle Schaft einen Kopf hat, der ein geflanschtes äußeres Ende mit einer Spitze mit einem verringerten Ende aufweist, wobei der Schaft und die Spitze so ausgebildet sind, daß ein Stützstab (3) mit einer Spitze sich durch den Schaft in solchen Eingriff mit der Schaftspitze erstrecken kann, daß von der Spitze des Stützstabes (3) ein spitzes Ende gebildet wird, wobei der hohle Schaft und die Schaftspitze aus elastischem Material hergestellt sind.

2. Ohrmarkenzapfen nach Anspruch 1, bei welchem der Schaft und die Schaftspitze aus einem Stück eines elastischen Materials gebildet sind.

3. Ohrmarkenzapfen nach Anspruch 2, bei welchem das Material aus der Gruppe Polyethylene niederer Dichte, Polyethylene hoher Dichte, Polypropylene, thermoplastische Polyurethane, Thermoplastgummi, PVC, ABS und Nylon, wie Nylon 6, gewählt ist.

4. Ohrmarkenzapfen nach Anspruch 3, bei welchem das Material ein Polyethylen niedriger Dichte ist.

5. Kombination aus Ohrmarkenzapfen/Stützstab mit einem Ohrmarkenzapfen (2) nach einem der Ansprüche 1 bis 4 und einem Stützstab (3) nach Anspruch 1, bei welchem der Stützstab (3) integral mit einem geflanschten äußeren Ende geformt ist und der Stab (3) eine solche Länge hat, daß, wenn er sich nicht weiter durch den Zapfenschaft erstrecken kann und die Zapfenspitze sowie die Spitze des Stabes (3) ein spitzes Ende bilden, ein Zwischenraum zwischen dem geflanschten äußeren Ende des Stabes (3) und der Rückseite der Zapfenplatte vorhanden ist.

6. Kombination aus Ohrmarkenzapfen/Stützstab nach Anspruch 5, bei welcher der Stützstab (3) aus einem Material hergestellt ist, das aus der Gruppe gewählt ist, die Acetal, Nylon 6, Nylon 66, Polykarbonate, modifiziertes Polypheroloxid, Polymethylmethacrylat (Acryl), Polystyrol, thermoplastischen Polyester, starres PVC, ABS, Metalle und Holz umfaßt.

7. Kombination aus Ohrmarkenzapfen/Stützstab nach Anspruch 6, bei welcher der Stützstab (3) aus einem glasfasergefüllten Nylon 66 hergestellt ist.

8. Verfahren zum Befestigen einer Ohrmarke an einem Tierohr, bei welchem eine Kombination (2, 3) aus Zapfen/ Stützstab nach einem der Ansprüche 5 bis 7 an den Backen einer Zange befestigt wird, die Zange zum Durchdrücken der Kombination (2, 3) aus Zapfen/Stützstab durch das Tierohr und in einen weiblichen Ohrmarkenteil (1) verwendet wird und danach der Stützstab (3) zurückgezogen wird.

9. Verfahren zum Herstellen eines Ohrmarkenzapfens nach einem der Ansprüche 1 bis 4, bei welchem elastisches Material nach Anspruch 3 zu einer Platte mit einem abstehenden hohlen Schaft geformt wird, der einen Kopf hat, welcher ein geflanschtes äußeres Ende mit einer Spitze aufweist.

10. Tier-Ohrmarkenzapfen mit einem Zapfen nach einem der Ansprüche 1 bis 4, wobei der Zapfen (2) mit einem weiblichen Teil (1) der Marke in Eingriff versetzbar ist.

FIG.1

FIG.2

FIG.3

7

FIG.4

FIG.5